# EUROPEAN PATENT APPLICATION

(11) **EP 2 538 354 A1**
(43) Date of publication of application: **26.12.2012**
(21) Application number: 12172899.2
(22) Date of filing: 21.06.2012
(51) Int. Cl.: G06F 17/30, H04N 1/32, G06F 3/048

(54) **Terminal and method for displaying data thereof**

(30) Priority: 21.06.2011 KR 20110059924
(71) Applicant: Samsung Electronics Co., Ltd., Suwon-si, Gyeonggi-do, 443-742 (KR)
(72) Inventor: Lee, Jeewon, 443-742 Gyeonggi-do (KR); Nam, Seungwook, 443-742 Gyeonggi-do (KR)
(74) Representative: de Baat, Michiel Anton

(57) **Abstract**

A method for displaying tag information in a region that matches with the data displayed in another region on the screen. The data display method of a terminal according to the present invention preferably includes displaying at least one tag information item in a list navigation region and a data item in a data display region on a screen in a data display mode; checking, when a selection event is detected in the data display region, the displayed data item; and picking the tag information item mapped to the data item in the list navigation region. The data display method of the present invention facilitates displaying the tag information in match with the data, the tag information and the data being displayed in a list navigation region and a data display region respectively.

## Description

### Field of the Invention

The present invention relates to a terminal, such as a portable communication terminal and to a data display method. More particularly, the present invention relates to a method for displaying tag information in a region that matches with the data displayed in another region on a screen of the portable terminal.

### Description of the Related Art

Recently, the types of data executable in a portable terminal has become more and more diverse both in type and amount. As a result of such diversity, the portable terminal is being configured to support numerous data display formats. More particularly, a dual-segment display is capable of displaying a screen divided into a navigation list region for presenting tag information items corresponding to the data stored in the terminal, and a data display region for presenting the data matched with the tag information items selected from the navigation list region.

In order to check one of the data items stored in the portable terminal, the user selects a tag information item representing the data from the navigation list region. The portable terminal then checks the tag information item selected by the user and displays the data item corresponding to the selected tag information item in the data display region of the display.

If the user selects an input event, such as, for example, a scroll event for selecting a tag information item in the navigation list region, then in response to the input event, the terminal scrolls the display of the navigation list composed the tag information items. In this case, the tag information items presented in the navigation list region may not match with the data item displayed in the data display region.

In order to display the tag information item matched with the data item displayed in the data display region, the user has to perform the input event repeatedly until the target tag information item final appears in the navigation list region, resulting in user inconvenience. There is, therefore, a need in the art for a method of facilitating display of the tag information item in the navigation list region that matches with the data item displayed in the data display region.

### SUMMARY OF THE INVENTION

The present invention provides a terminal and method for selecting data and tag information in synch with each other.

In accordance with an exemplary aspect of the present invention, a data selection method of a portable terminal preferably includes forming a list of tag information items and displaying at least one tag information item from that list in a list navigation region and a data item from a data display region on a screen in a data display mode. In an embodiment the tag information item is associated with the data item.

In an embodiment the method comprises determining by a controller the displayed data item, when a selection event is detected in the data display region. In an embodiment the method further comprises identifying by the controller the tag information item associated with the selected data item from the list. Accordingly, a selection event in the data display region results in the identification of the corresponding tag information item and possible manipulation thereof.

In an embodiment the method further comprises checking, when a selection event is detected in the data display region, the displayed data item.

In an embodiment the tag information item is mapped to the data item. In an embodiment the method comprises picking (i.e. identifying) the tag information item mapped to the data item in the list navigation region. In an embodiment the identifying is automatically performed upon data selection.

In an embodiment identifying includes modifying a visual display of the tag information item or navigating the display screen until the tag information item is shown and in a manner described *supra,* visually distinguishing the output of the particular tag information by the display.

In an embodiment the method comprises navigating by the controller the display of at least one tag information item, when an input event for navigating the display of at least one tag information item is detected in the list navigation region. As a result of the selection event in the data display region being detected, the tag information item mapped to the data item is displayed in the list navigation region. Displaying can comprise rearranging the displayed tag information items.

In an embodiment navigating the display comprises scrolling the display of at least the navigation region of the display screen.

In an embodiment identifying the tag information item comprises rearranging the display of the tag information item in the list navigation region and visually discriminating the display of the tag information item mapped to the data item from a remainder of tag information items.

In a further embodiment visually discriminating display of the tag information comprises highlighting the tag information item mapped to the data item.

In another embodiment visually discriminating the display of the tag information comprises isolating the tag information mapped to the data item with a block.

In yet a further embodiment visually discriminating the display of the tag information comprises distinguishing the display of the tag information associated with the selected data item by one or more format properties such as size, color, flashing/blinking, background display, font, italics, underlining, alternating colors or formats.

In accordance with another exemplary aspect of the present invention, a data selection terminal preferably includes a memory for a list of tag information items and a display unit arranged to display at least one tag information item from the list in a list navigation region and a data item in a data display region on a screen in a data display mode. The display unit comprises a screen.

In an embodiment the terminal further comprises a control unit arranged to determine a selection event in the data display region of the the displayed data item. In an embodiment the control unit is arranged to identify the tag information associated with the selected data item from the list. The terminal according to the invention thereby allows any subsequent suitable action as a result of selecting a data item based on the identification..

In an embodiment the control unit is further arranged to identify the tag information item mapped to the data item in the list navigation region. Accordingly the identified tag information item can be manipulated.

In an embodiment the control unit is arranged to map the identified tag information to the displayed data item selected by the selection event.

In an embodiment the display unit comprises a touchscreen with a touch sensor arranged to determine selection of a data item by sensing touch of a particular data item.

In an embodiment the display unit comprises a touchscreen with a touch sensor arranged to determine selection of a data item by sensing touch of a particular data item.

In an embodiment the control unit is arranged to allow navigation. The control unit is arranged to, when an input event for navigating the at least one tag information item in the list navigation region is detected, navigate the at least one tag information item. The control unit is arranged to display, when the selection event is detected in the data display region, the tag information item mapped to the data item in the list navigation region as rearranged relative to a respective display of other tag information associated with other data items.

In an embodiment the control unit is arranged to rearrange the display of the tag information item in the list navigation region. In an embodiment the control unit is arranged to discriminate display of the tag information item mapped to the data item from a display of other tag information items associated with other respective data items.

In an embodiment the control unit is arranged to control the display unit to highlight display of the tag information item mapped to the data item.

In an embodiment the control unit is arranged to control the display unit to isolate display of the tag information mapped to the data item with a block.

In an embodiment the display unit is arranged to display the tag information associated with a respectively selected data item visually discriminated from other tag information by the list navigation region.

In an embodiment the visual discrimination includes at least one discriminating format property such as size, color, flashing/blinking, background display, font, italics, underlining, alternating colors or formats.

In an embodiment the terminal further comprises a communication unit for wireless communication with a base station or server.

According to a further aspect the invention also provides for computer readable medium having a computer program stored thereon, the computer program when executed on a computer arranged to execute the method as described herein._

The invention will now be described with reference to the drawing, showing embodiments of the device and of the invention. The invention is not limited to the exemplary embodiments.

### BRIEF DESCRIPTION OF THE DRAWINGS

FIG. 1 is a block diagram illustrating a configuration of the terminal according to an exemplary embodiment of the present invention;
FIG. 2 is a diagram illustrating exemplary screens showing steps of displaying tag information item and data matched with each other on the screen of the terminal according to an exemplary embodiment of the present invention; and
FIG. 3 is a flowchart illustrating a data display method according to an exemplary embodiment of the present invention.

### DETAILED DESCRIPTION

Exemplary embodiments of the present invention will now be described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention. Although the terms used in the present invention are selected from generally known and used terms considering their functions in the present invention, the terms can be modified depending on intention of a person skilled in the art, practices, or the advent of new technology. Accordingly, the terms used herein should be understood not simply by the actual terms used but by the meaning lying within and the description disclosed herein.

The term "terminal" denotes an information processing device that is capable of processing data to be transmitted and received. While the exemplary embodiments herein refer to a portable communication terminal, the terminal of the presently claim invention can store various types of data. Here, the terminal may comprise any of plurality of different types of devices, including but limited to a computer, laptop, tablet PC, mobile terminal, MP3, etc., although the exemplary description is directed to a smartphone.

The term "data display mode" denotes the operation mode in which the screen of the terminal is divided into, for example, two regions one for displaying tag information items and the other for the data item corresponding to the selected tag information item. The data display mode may preferably include an outgoing/incoming message check mode, and video playback mode. The data displayed in the display modes can be stored in various formats including text message, document composed with a document composition function, still formats and motion picture formats, and document(s) captured by means of a camera or downloaded from outside.

The term "tag information" preferably refers to a keyword or a class assigned to the data stored in the terminal. In other words, the tab information is the information assigned for facilitating access to a target data item. The tag information can be configured per data item by the user or automatically by the controller with default value set at the generation stage. The tag information can be configured in the form of text or thumbnail image and include creation date and time and title of the data.

The term "scroll event" denotes an action in which the user makes a touch in the navigation list region on the touchscreen with input means such as finger and then moves in a vertical or a horizontal direction.

The term "selection event" denotes the action in which the user contacts and then releases a contact of a particular event displayed in the data display region with the input means to select a tag information item that matches with the data items displayed in the data display region.

The term "function execution event" denotes the action in which the user makes in the data display region with the input means double contacts and then releases the double contacts to execute the function related to the data item displayed in the data display region.

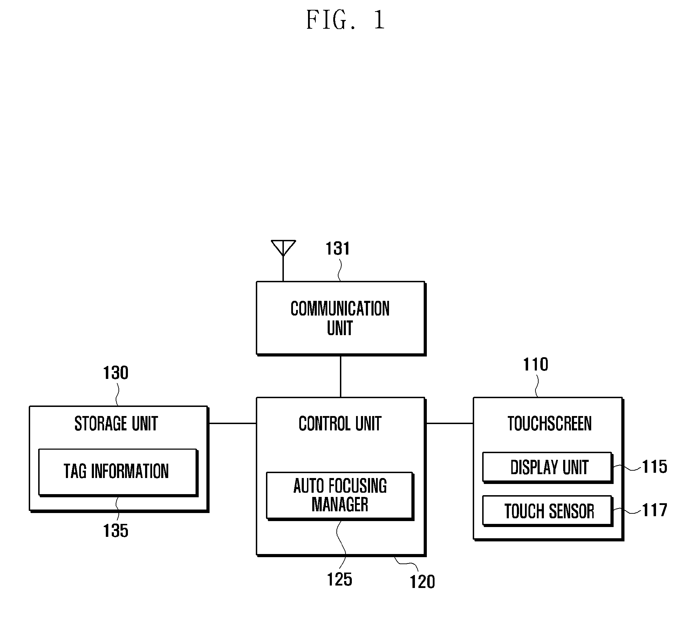

FIG. 1 is a block diagram illustrating a configuration of the terminal according to an exemplary embodiment of the present invention.

As shown in FIG. 1, the terminal preferably includes, for example a touchscreen 110, a control unit 120, and a storage unit 130.

The touchscreen 110 preferably includes a display unit 115 and a touch sensor 117 arranged at, for example, a side of the display unit 115. The display unit 115 displays information input by or to be presented to the user as well as various menus of the terminal. The display unit can be implemented with a Liquid Crystal Display (LCD), or virtually any type of thin-film technology. In an exemplary embodiment of the present invention, the display unit 115 is provided with a list navigation region for presenting tag information items in the form of a list, and a data display region for presenting the data represented by the tag information item selected in the list navigation region.

The display unit 115 can display, for example, the tag information scrolling according to a scrolling event detected on the list navigation region under the control of the control unit 120. If a selection event is detected on the data display region, the display unit 115 can display the tag information item mapped to the data item presented on the data display region under the control of the control unit 120.

Still referring to FIG. 1, the touch sensor 117 is mounted in this example. at a side of the display unit 115 to detect the input touch event made on the surface of the display unit 115. Here, the touch senor 117 can be any of a capacitive sensor, a microwave reflective sensor, optical sensor, and an electron inductive sensor. The touch sensor 117 can detect the coordinates, i.e. position, at which the touch event is made. The touch sensor 117 transfers the detected coordinates to the control unit 120.

The control unit, which preferably comprises hardware such as processor or microprocessor, 120 controls the overall operations and settings of the function blocks of the terminal. According to an exemplary embodiment of the present invention, the control unit 120 controls the display unit 115 to display an output divided between the list navigation region and the data display region. It is well within the spirit and scope of the claimed invention that the control unit 120 controls the display unit 115 to display at least one tag information item and an associated data item in the respective regions. The control unit may include, for example, comparator circuitry, bistable circuitry, etc.

The control unit 120 also checks (i.e. determines) the input event based on the coordinates transferred by the touch sensor 117. In more detail, the control unit 120 can analyze the received touch coordinates from the touch sensor to determine whether or not the input event was made on the list navigation region or the data display region of the display. The control unit 120 also can detect a scroll event made in order to scroll the list of the tag information items displayed in the list navigation region by analyzing the change of the coordinates provided by the touch sensor 117. The control unit 120 also determines the input of a selection event for selecting a tag information item mapped to the data item displayed in the data display region based on the coordinates provided by the touch sensor 117.

The control unit 120 can be configured to control the display unit to display the tag information item corresponding to the data item displayed in the data display region in response to the input event. For this purpose, the control unit 120 includes an auto focusing manager 125.

The auto focusing manager 125 is configured to control the display unit 115 to display the tag information item in the list navigation region in match with the data item displayed in the data display region according to the input event. In other words, the auto focusing manager 125 scrolls the list of the tag information items in the list navigation region automatically to match with the data display region to focus on the selected tag information item. At this time, the auto focusing manager 125 can control the display unit 115 to display the selected tag information item so as to be discriminated from other tag information items in the list navigation region. This discrimination can be in any of a plurality of ways with one or more of size, color, flashing/blinking, background, different font, italics, underlined, alternating colors or formats.

The auto focusing manager 125 can control the display unit 115 to display the target tag information at the top of the list navigation region, or at any other location as desired. The auto focusing manager 125 can control the display unit 115 to display auto-scrolled target tag information item as highlighted or blocked.

The storage unit 130, which comprises a non-transitory machine readable memory, stores the program and data necessary for the operations of the function blocks of the terminal under the control of the control unit 120. The storage unit 130 also stores the tag information items 135 mapped to the stored data under the control of the control unit 12.

Although not depicted in the drawing, the terminal may further include various components according to the functions as employed by the terminal for a specific application. For example, the terminal may further include a communication unit responsible for transmitting and receiving signals carrying data such as voice, video, and text in a number of different transmission protocols, a camera unit for capturing both still pictures and moving images, a digital broadcast receiver for receiving digital broadcast data, and a short range communication unit for short range communication.

The above-structured terminal controls such that the screen of the display unit 115 is preferably located between the list navigation region for presenting the tag information items and the data display region for presenting data. In data display mode, the terminal displays at least one tag information item in the list navigation region and the data matched with the selected tag information in the data display region.

If a selection event is detected in the data display region, the terminal check the data item displayed in the data display region. Next, the terminal checks the tag information item mapped to the data item displayed in the data display region. Next, the terminal scrolls the display of the checked tag information item to be presented at a predetermined position in the list navigation region. At this time, the terminal can control the display such that the target tag information item is displayed in a way that discriminates such display from other tag information items in the list navigation region. According to this aspect of the present invention, the tag information item can be searched for the that corresponds to the data item displayed in the data display region, and display of the searched tag information item can be displayed in the list navigation region to match with the data item.

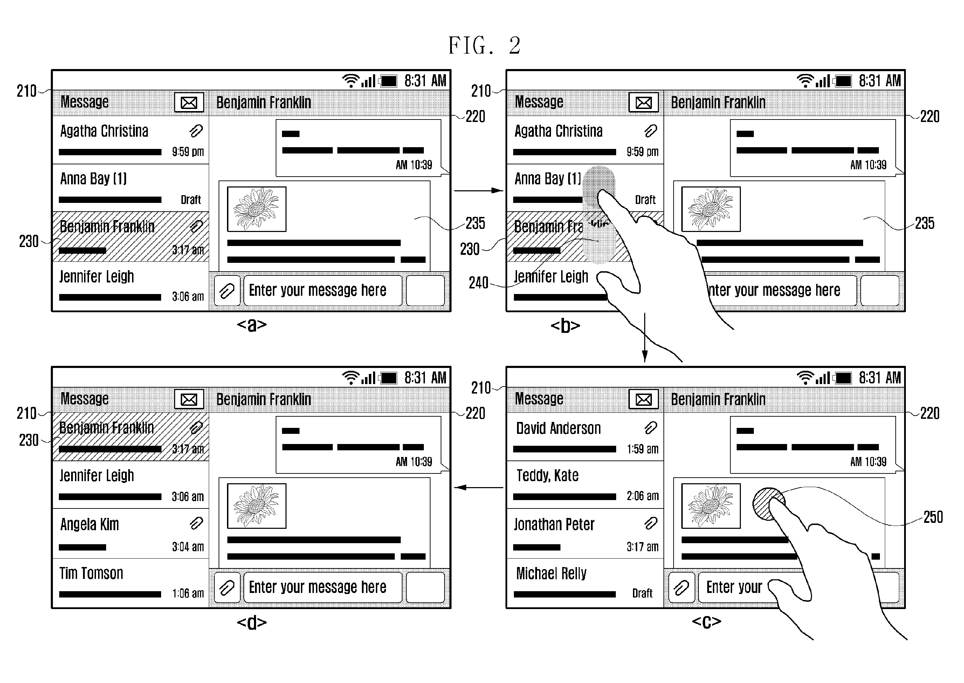

FIG. 2 is a diagram illustrating exemplary screens showing steps of displaying tag information item and data matched with each other on the screen of the terminal according to an exemplary embodiment of the present invention. The description is directed to the example in which the terminal displays a message in the data display mode.

Referring now to FIG. 2, the control unit 120 controls the display unit 115 to display a stored message selected by the user. In more detail, the control unit 120 controls the display unit 115 to display a screen having a list navigation region 210 and a data display region 220 as shown in part <a> of FIG. 2. The control unit 120 controls such that the information about the user selecting the message is displayed in the list navigation region 210 as the tag information and the message in the data display region 220.

The control unit 120 controls the display unit 115 to display the message 235, which is mapped to Benjamin Franklin (230) as the tag information selected by the user from the list navigation region 210, in the data display region 220. The control unit 120 determines whether or not a scroll event is detected in the list navigation region 210 on the touchscreen 110 as shown in part <b> of FIG. 2.

If a scroll event is detected, the control unit 120 is configured to control the display unit 115 to scroll the tag information list in the direction of the scroll event (which in <b> is seen to be an upward vertical scroll) such that the target tag item is placed at a predetermined position of the list navigation region 210 as shown in part <c> of FIG. 2. More particularly, the control unit 120 controls the display unit 115 such that the tag information item of Benjamin Franklin 230 which has been displayed in the list navigation region 210 as shown in part <a> is scrolled to disappear according to the scroll event 240.

Next, the control unit 120 determines whether a selection event 250 is detected, typically by touch detection, in the data display region 220 as shown in part <c> of FIG. 2. If a selection event 250 is detected in the data display region, the control unit 120 controls the display unit 115 such that the tag information of Benjamin Franklin 230 mapped to the message displayed in the data display region 220 is placed at the top of the list navigation region 210 as shown in part <d> of FIG. 2.

The control unit 120 can control the display unit 115 such that the rearranged tag information item is displayed in the list navigation region as highlighted information to discriminate this information from other tag information items. The control unit 120 also can control the display unit 115 such that the rearranged tag information item is blocked to be discriminated from other tag information items.

In addition, communication unit 131 provides wireless communication between the terminal and, for example, a base station, a server, or even another terminal directly if there is a peer-to-peer communication capability. The communication unit can operate for example in Bluetooth, W.A.P., or any other type of wireless protocol suited for a mobile communication terminal.

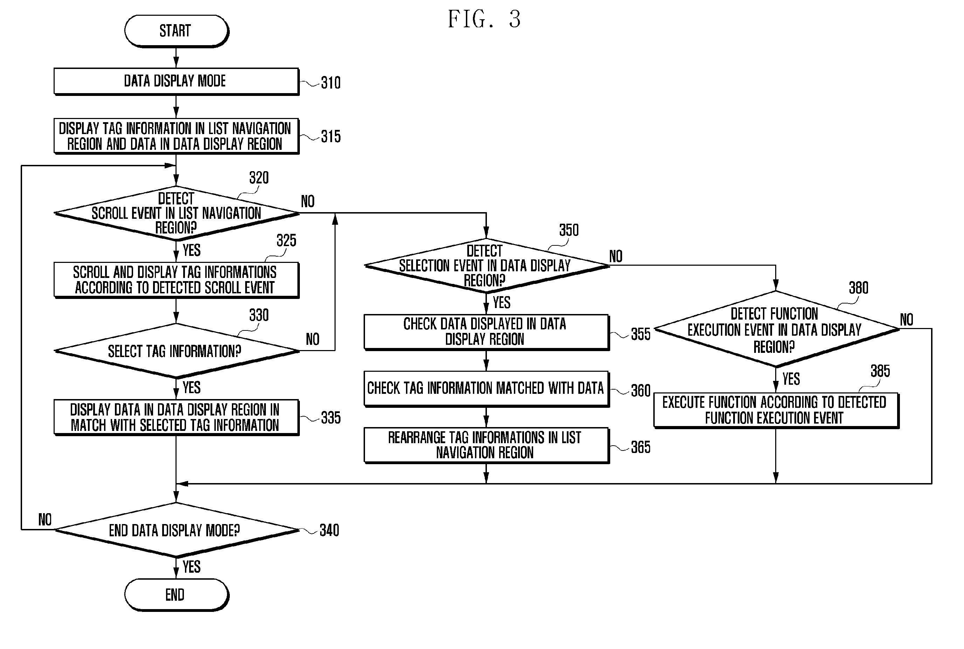

FIG. 3 is a flowchart illustrating a data display method according to an exemplary embodiment of the present invention.

Referring now to FIG. 3, at (S310) the control unit 120 executes the data display mode in which a data item selected from the storage unit 130 and the tag information item representing the data item are displayed in the data display region and list navigation region, respectively. Next, at (S315) the control unit 120 controls the display unit 115 to display a screen divided into the list navigation region and the data display region. The control unit 120 controls the display unit 115 to display at least one tag information item in the list navigation region and the data item mapped to the tag information item selected in the list navigation region.

Next, the control unit 120 at (S320) determines whether or not a scroll event for navigating the tag information items is detected in the list navigation region. If a scroll event is detected, the control unit 120 scrolls the tag information items in the list navigation region according to the detected scroll event (325).

Next, the control unit 120 determines at (S330) whether or not a tag information item is selected from the tag information list in the list navigation region. If a tag information item is selected, then at (S335) the control unit controls the display unit 115 to display the data item corresponding to the selected tag information item in the data display region. Finally, at (S340) the control unit 120 determines whether or not a data display mode termination request is input. If the data display mode termination request is input, the control unit 120 returns the procedure to (S 320).

If a scroll event is not detected at (S320) or if tag information item is not selected at (S330), the control unit 120 determines at (S350) whether a selection event is detected in the data display region on the touchscreen 110 for selecting tag information item mapped to the data item displayed in the data display region. If the selection event is detected in the data display region, then at (S355) the control unit checks the data displayed in the data display region.

Next, at (S360) the control unit 120 checks whether the tag information item is mapped to the checked data item. Next, the control unit 120 controls the display unit 115 to scroll the tag information list such that the checked tag information item is presented at a predetermined position in the list navigation region.

That is to say, if the selection event 350 is detected in the data display region 220, the control unit 120 controls the display unit 115 to scroll the tag information list such that the tag information item mapped to the message displayed in the data display region is placed at the top of the tag information list in the list navigation region. The control unit 120 also controls the display unit 115 such that the tag information item placed at the top of the list is presented in a different color to be discriminated from other tag information items listed in the list navigation region. The control unit 120 also controls the display unit 115 such that the tag information item placed at the top of the list navigation region is highlighted to be discriminated from other tat information items. The control unit 120 also can control such that the target tag information item is blocked so as to be discriminated from other tag information items in the list navigation region.

If at (S350) there is no selection event is detected in the data display region, the control unit 120 at (S380) then determines whether a function execution event is detected in the data display region. If at (S385) it is determined by the controller that a function execution event is detected, the control unit 120 executes the function targeted by the function execution event. For example, under the assumption that the data an incoming message is displayed in the data display region, if the function execution event is detected in the data display region, the control unit 120 controls the display unit 115 to display the message in full screen. If the function execution event is detected in the data display region presenting video data, the control unit 120 plays the video data.

As described above, the data display method of the present invention is capable of facilitating search for the tag information from the tag information list displayed in a list navigation region in match with the data displayed in a data display region, the list navigation region and the data display region being provided on a screen. The terminal of the present invention in an exemplary embodiment provides a method facilitating data search using the relation between the list navigation region and the data display region on a screen. While the preferred form of navigation in this invention is scrolling based on touch, other forms of navigation by tapping, moving the display which is sensed by a gyroscope, etc. can also be used.

As described above, the terminal and data display method of the present invention may provide display of target tag information in a list navigation region in match with the data displayed in the date display region. Also, the terminal and data display method of the present invention enables the user to check the target tag information from the list of the tag information items in the list navigation region in match with the data displayed in the data display region.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A data selection method of a terminal, comprising:
forming a list of tag information items and displaying tag information items from the list in a list navigation region of a display
displaying a data item in a data display region on a screen in a data display mode, wherein a tag information item from the list is associated with the data item;
determining by a controller the displayed data item, when a selection event is detected in the data display region; and
identifying by the controller the tag information item associated with the determined data item from the list.

2. The data selection method of claim 1, wherein the tag information item is mapped to the data item.

3. The data selection method of claim 2, further comprising:
navigating by the controller the display of at least one tag information item, when an input event for navigating the display of at least one tag information item is detected in the list navigation region; and
displaying the tag information item mapped to the data item in the list navigation region as rearranged when the selection event is detected in the data display region.

4. The data selection method according to any of the previous claims, wherein the method further comprises navigating the display by scrolling the display of at least the navigation region of the display screen.

5. The data selection method according to any of the previous claims, wherein identifying the tag information item comprises:
rearranging the display of the tag information item in the list navigation region; and
visually discriminating the display of the tag information item mapped to the data item from a remainder of tag information items.

6. The data selection method of claim 5, wherein visually discriminating display of the tag information comprises highlighting the tag information item mapped to the data item
or
wherein visually discriminating the display of the tag information comprises isolating the tag information mapped to the data item with a block
or
wherein visually discriminating the display of the tag information comprises distinguishing the display of the tag information associated with the selected data item by one or more of size, color, flashing/blinking, background display, font, italics, underlining, alternating colors or formats.

7. A terminal comprising:
a memory arranged to provide a list of tag information items and to provide data items associated with respective tag information items,
a display unit arranged to display at least one tag information item from the list in a list navigation region and an associated data item in a data display region on a screen in a data display mode; and
a control unit arranged to determine a selection event in the data display region of the displayed data item and arranged to identify the tag information associated with the displayed data item from the list.

8. The terminal of claim 7, wherein the control unit is arranged to map the identified tag information to the displayed data item selected by the selection event.

9. The terminal of claim 8, wherein the control unit is arranged to navigate the display, when an input event for navigating the at least one tag information item is detected in the list navigation region, of the at least one tag information item and is arranged to display, when the selection event is detected in the data display region, the tag information item mapped to the data item in the list navigation region as rearranged relative to a respective display of other tag information associated with other data items.

10. The terminal according to any of the claims 7 - 9, wherein the display unit comprises a touchscreen with a touch sensor for determining selection of a data item by sensing touch of a particular data item.

11. The terminal according to any of the claims 7 -10, wherein the control unit is arranged to rearrange the display of the tag information item in the list navigation region and discriminates display of the tag information item mapped to the data item from a display of other tag information items associated with other respective data items.

12. The terminal of claim 11, wherein the control unit is arranged to control the display unit to highlight display of the tag information item mapped to the data item, or wherein the control unit is arranged to control the display unit to isolate display of the tag information mapped to the data item with a block.

13. The terminal of claim 11, wherein the display unit is arranged to display the tag information associated with a respectively selected data item visually discriminated from other tag information by the list navigation region.

14. The terminal of claim 13, wherein the visual discrimination includes at least one of size, color, flashing/blinking, background display, font, italics, underlining, alternating colors or formats.

15. The terminal according to any of the claims 7 -14, further comprising a communication unit for wireless communication with a base station or server.
